# FASCICULE DE BREVET EUROPEEN

(11) **EP 0 681 112 B1**
(45) Date de publication et mention de la délivrance du brevet: **04.08.1999**
(21) Numéro de dépôt: 95401047.6
(22) Date de dépôt: 05.05.1995
(51) Int. Cl.: F16C 1/22, F16C 1/12, F02D 11/04

(54) **Dispositif de réglage pour câble de commande**
Einstellungsvorrichtung für einen Bowdenzug
Adjusting device for a control cable

(30) Priorité: 06.05.1994 FR 9405603
(43) Date de publication de la demande: 08.11.1995
(73) Titulaire: SYSTEMES B L G, F-60730 Ste Geneviève (FR)
(72) Inventeur: Moreau, Thierry, F-60160 Montataire (FR)
(74) Mandataire: Schrimpf, Robert

(56) Documents cités:
- DE-U- 9 005 223
- FR-A- 2 708 059
- GB-A- 2 081 411
- US-A- 5 235 867

## Description

La présente invention concerne le domaine des dispositifs de réglage pour câbles de commande reliant un premier organe mécanique mobile (par exemple un mécanisme papillon commandant l'admission des gaz), à un deuxième organe mécanique mobile qui permet de le commander à distance (par exemple un levier de pédale d'accélérateur d'un véhicule automobile). Ces deux organes mécaniques mobiles sont montés avec une possibilité de déplacement limitée par rapport à un bâti (par exemple constitué par caisse du véhicule). L'invention concerne plus particulièrement un dispositif de réglage permettant, lors de la pose du câble ou lors d'opérations d'entretien, de faire correspondre la course en déplacement des deux organes mécaniques mobiles.

Le câble de commande est habituellement monté à coulissement à l'intérieur d'une gaine flexible s'étendant selon un trajet courbe déformable entre les deux organes mécaniques mobiles. On a proposé de fixer la gaine à une extrémité au bâti et de monter la gaine à déplacement dans le bâti à l'autre extrémité, au moyen d'un manchon prolongeant la gaine, apte à se déplacer avec frottement dans un perçage du bâti. Une traction sur le câble supérieure à une valeur donnée, exercée par le deuxième organe mécanique mobile lors du réglage se traduit, par réaction, en un déplacement du manchon dans le perçage du bâti, entraînant une modification de la longueur du câble s'étendant hors de la gaine et du manchon qui permet de faire correspondre la course en déplacement du premier organe mécanique mobile avec celle du deuxième. La gaine comporte habituellement une armature constituée par un ressort dont les spires ont tendance à s'écarter lorsque la gaine décrit des courbes serrées. Lors du réglage, les spires se rapprochent élastiquement sous l'effet des efforts parcourant la gaine et accumulent de l'énergie élastique qui est ensuite restituée brutalement lors du déplacement du manchon dans le perçage du bâti, rendant ainsi difficile l'obtention d'un réglage précis. Par ailleurs, le manchon doit être verrouillé manuellement en position dans le perçage du bâti après réglage, par la pose d'une agrafe.

Le document DE-U-9 005 223 divulgue un dispositif de réglage destiné à être fixé sur un premier organe mécanique et à relier par un câble à un deuxième organe mécanique mobile en translation, et comportant un levier articulé autour d'un axe de rotation à une extrémité et apte à être relié au câble à l'autre extrémité, par une liaison pivotante autour d'un axe parallèle audit axe de rotation le dispositif comportant des moyens de blocage aptes à interdire le pivotement du levier.

La présente invention a pour objet un dispositif de réglage perfectionné qui permet de faire correspondre, lors de la pose du câble ou lors d'opérations d'entretien, la course en déplacement de deux organes mécaniques mobiles, d'une façon précise et entièrement automatique.

Le dispositif de réglage selon l'invention y parvient par le fait qu'il comporte un coulisseau monté avec une possibilité de déplacement en translation sur une glissière apte à être fixée sur un premier organe mécanique mobile, un levier articulé autour d'un axe de rotation à une extrémité sur ledit coulisseau et apte à être relié par une liaison pivotante, d'axe parallèle audit axe de rotation, au câble à l'autre extrémité, la glissière étant orientée perpendiculairement à la direction de déplacement du câble en son point d'attache sur le dispositif. Le levier est apte à pivoter en écartement de ladite glissière lorsqu'une traction supérieure à une valeur donnée est exercée sur le câble, afin de faire correspondre la course en déplacement des deux organes mécaniques mobiles et le dispositif comporte des moyens de blocage aptes à interdire le pivotement en sens inverse du levier.

Avantageusement, des moyens de rappel élastiques agissent entre le coulisseau et le levier pour s'opposer au pivotement de ce dernier en écartement de ladite glissière.

Dans une réalisation de l'invention, lesdits moyens de rappel élastiques sont constitués par un ressort hélicoïdal, coaxial audit axe de rotation, dont les extrémités sont retenues sur le levier et sur le coulisseau respectivement. De préférence, une extrémité du ressort est retenue sur le coulisseau dans un logement formé entre deux extensions latérales de montage du coulisseau sur la glissière.

Selon une caractéristique avantageuse de l'invention, la glissière est constituée par une tige recourbée en forme de U, le coulisseau étant monté à translation sur une branche du U, l'autre branche du U étant fixée par son extrémité libre sur le premier organe mécanique mobile.

Selon une autre caractéristique avantageuse de l'invention, les moyens de blocage précités comportent un secteur cranté solidaire du coulisseau et s'étendant selon un arc de cercle centré sur l'axe de rotation et des moyens formant cliquet, portés par le levier et aptes à venir en prise sur le secteur cranté pour interdire le mouvement de pivotement en sens inverse du levier.

Selon une autre caractéristique avantageuse de l'invention, le coulisseau comporte un corps allongé selon une direction parallèle à la direction de déplacement du coulisseau sur la glissière, le levier étant monté à pivotement à une extrémité de ce corps allongé, et l'autre extrémité du corps allongé s'étendant au-delà du secteur cranté à l'opposé de l'axe de rotation du levier pour servir de butée de pivotement au levier.

Selon une autre caractéristique avantageuse de l'invention, le coulisseau est monté sur la glissière avec une possibilité de rotation autour de sa direction de déplacement sur celle-ci.

D'autres caractéristiques et avantages de la présente invention apparaîtront à la lecture de la description qui va suivre, d'un exemple de réalisation non limitatif de l'invention, et à l'examen du dessin annexé sur lequel :
- la figure 1 est une vue de côté selon la direction de pivotement du levier sur le coulisseau, avant réglage,
- la figure 2 est une vue de dessus selon la direction de déplacement du coulisseau sur la glissière, avant réglage,
- la figure 3 est une vue analogue à la figure 1, après réglage,
- la figure 4 est une vue analogue à la figure 2, après réglage.

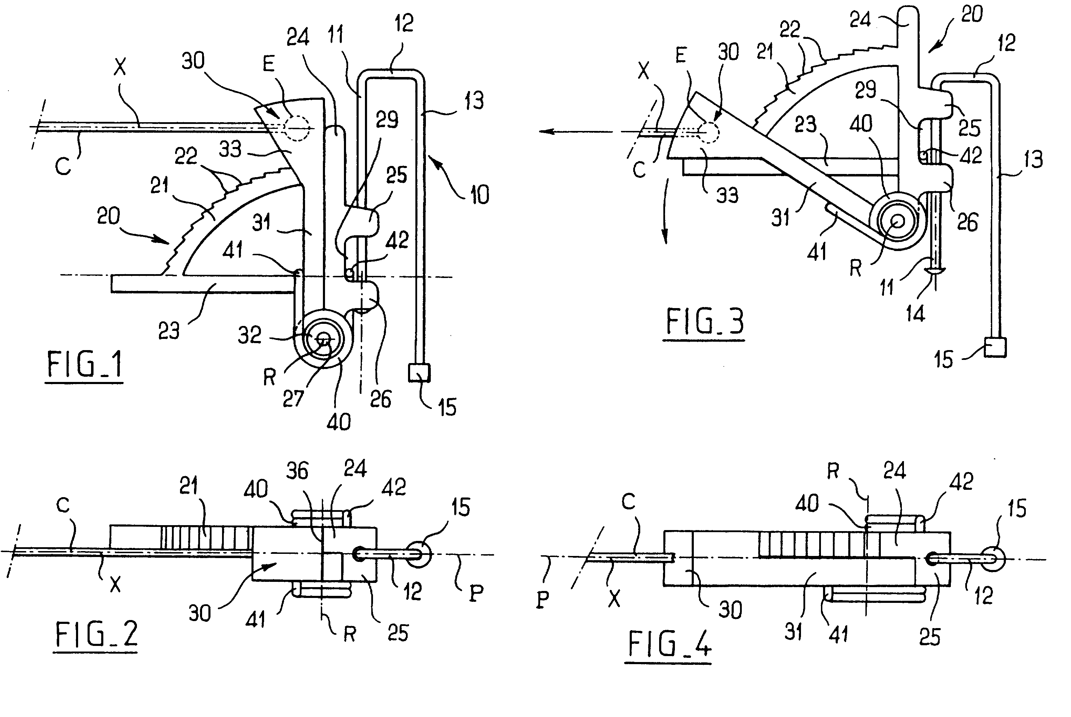

Le dispositif de réglage représenté sur les figures 1 à 4 est destiné à être fixé, par tous moyens appropriés, sur un premier organe mécanique mobile connu en lui-même et non représenté pour en suivre les mouvements. Dans l'exemple de réalisation décrit, il s'agit d'un mécanisme papillon commandant l'admission des gaz sur un véhicule automobile. Ce mécanisme se déplace en translation, de la gauche vers la droite et réciproquement sur les figures, sous l'action d'un câble de commande C. La course en déplacement du mécanisme papillon s'effectue entre deux positions extrêmes correspondant à l'admission maximale (déplacement maximum vers la gauche) et à l'admission minimale (déplacement maximum vers la droite) des gaz, en étant rappelé dans cette dernière position contre une butée fixe par des moyens de rappel élastiques. Le câble de commande C est relié à un deuxième organe mécanique mobile, connu en lui-même et non représenté, constitué dans l'exemple de réalisation décrit par un levier de pédale d'accélérateur.

La course en déplacement de ce dernier est limitée par une butée basse qui définit une position extrême d'enfoncement du levier et que l'on cherche à faire correspondre, grâce au dispositif de réglage conforme à l'invention, avec la position d'admission maximale des gaz du mécanisme papillon. Le câble de commande C est de préférence monté à coulissement dans une gaine flexible connue en elle-même et non représentée, dont les extrémités sont fixes.

Le câble de commande C est muni à son extrémité raccordée au dispositif de réglage d'un embout d'accrochage E connu en lui-même, de forme externe cylindrique de révolution autour d'un axe E' perpendiculaire à l'axe longitudinal X du câble en son point d'attache sur le dispositif. L'embout E est retenu dans un logement prévu à cet effet à une extrémité 33 d'un levier 30. Celui-ci est monté à pivotement à son autre extrémité 32, au moyen d'un tourillon 27, autour d'un axe de rotation R sur un coulisseau 24. L'embout E est libre de pivoter dans le logement précité autour de son axe E' orienté parallèlement à l'axe de rotation R du levier 30. Le coulisseau 24 est monté à translation sur une glissière 10 solidaire du mécanisme papillon, rapportée sur celui-ci ou venue de formation avec celui-ci.

Dans l'exemple de réalisation décrit, la glissière 10 présente sur les vues de côté des figures 1 et 3, c'est-à-dire selon la direction de l'axe de rotation R du levier 30, la forme d'un U dont la concavité est tournée vers le bas sur le dessin, c'est-à-dire du côté du mécanisme papillon. La glissière 10 comporte deux branches rectilignes et parallèles reliées à leur extrémité supérieure par un dos rectiligne 12 perpendiculaire aux branches. L'une des branches, référencée 13, est plus longue que l'autre et elle est fixée à son extrémité inférieure 15 par tout moyen approprié sur le mécanisme papillon, en étant orientée perpendiculairement à la direction de déplacement en translation de celui-ci, parallèle à l'axe X. Le coulisseau 24 est monté à translation sur l'autre branche du U, référencée 11, et il est retenu sur celle-ci par un épaulement 14 formé à l'extrémité libre de cette dernière. De préférence, la branche 11 de la glissière 10 portant le coulisseau 24 présente une section circulaire de façon à autoriser, en plus du mouvement de translation du coulisseau 24 sur la glissière 10, un mouvement de rotation autour de son axe, permettant une plus grande facilité de montage du dispositif.

Le coulisseau 24 présente un corps allongé s'étendant parallèlement à la branche 11, muni sur le côté opposé au câble C de deux extensions latérales 25 et 26 à l'intérieur desquelles coulisse la branche 11. Les deux extensions latérales 25 et 26 sont espacées le long du coulisseau pour ménager un logement 29 situé entre le corps allongé du coulisseau 24 et la branche 11 de la glissière 10. L'extension latérale la plus proche de l'axe de rotation R porte la référence 26. Le coulisseau 24 présente, du côté opposé aux extensions latérales 25 et 26, c'est-à-dire du côté du câble C, une branche 23 rectiligne, de section transversale rectangulaire, s'étendant perpendiculairement à la direction longitudinale du coulisseau et située dans le prolongement de l'extension latérale 26.

Des moyens de blocage sont prévus pour interdire un pivotement du levier 30 en rapprochement de la glissière 10 tout en autorisant un pivotement en sens inverse. Plus particulièrement, dans l'exemple de réalisation décrit, ces moyens de blocage comportent un secteur cranté 21 s'étendant du côté du corps allongé situé à l'opposé de la branche 11, selon un arc de cercle de 60° environ autour de l'axe de rotation R, en reliant la face supérieure de la branche 23 et le corps allongé du coulisseau 24 et ces moyens de blocage comportent également des moyens formant cliquet situés sur le levier 30, adaptés à venir en prise sur le secteur cranté 21 pour interdire le mouvement de pivotement du levier en rapprochement du corps allongé du coulisseau 24. Le secteur cranté 21 se raccorde sur la branche 23 en un point situé approximativement au tiers de la longueur de cette dernière en partant de son extrémité libre 23a opposée au corps allongé 24 et le secteur cranté 21 se raccorde sur le corps allongé 24 en un point situé approximativement au cinquième de la longueur de ce dernier en partant de son extrémité 24a la plus éloignée de l'axe de rotation R.

Le levier 30 comporte un corps 31 rectiligne, articulé à l'extrémité 32 sur le coulisseau 24 et prolongé à l'extrémité opposée par une tête élargie 33 logeant l'embout E d'accrochage du câble C et dans laquelle sont montés les moyens formant cliquet précités.

Si l'on se réfère plus particulièrement aux figures en vue de dessus 2 et 4, prises selon la direction des branches 11 et 13, on remarque que le corps rectiligne 31 du levier 30 et le corps allongé du coulisseau 24 se situent respectivement de part et d'autre d'un plan P, perpendiculaire à l'axe de rotation R et contenant l'axe longitudinal du câble C. La tête élargie du levier 33 s'étend de part et d'autre de ce plan P et elle est apte à venir en butée, dans la position initiale de montage correspondant aux figures 1 et 2, contre la partie supérieure du corps allongé du coulisseau 24 comprise entre l'extrémité libre 24a et l'extension latérale 25.

Des moyens de rappel élastiques sont avantageusement prévus pour rappeler le levier 30 en pivotement dans le sens horaire sur les figures vers cette position de butée contre le corps allongé du coulisseau 24. Plus particulièrement, dans l'exemple de réalisation décrit, ces moyens de rappel élastiques sont constitués par un ressort hélicoïdal 40, coaxial à l'axe de rotation R, travaillant en torsion et retenu à une extrémité 42, d'un côté du plan P, dans le logement 29 précité et s'appuyant à l'autre extrémité 41, de l'autre côté du plan P, sur le corps rectiligne 31 du levier 30.

Le fonctionnement du dispositif de réglage qui vient d'être décrit est le suivant.

La glissière 10 est fixée en 15 par tout moyen approprié connu de l'homme du métier sur le mécanisme papillon, le levier étant en position initiale non écartée comme représenté sur les figures 1 et 2, et l'embout E du câble de commande C étant retenu dans la tête élargie 33 du levier 30. La glissière 10 est orientée par rapport à la direction de déplacement du mécanisme papillon de sorte que la branche 11 s'étend perpendiculairement à ladite direction de déplacement et le câble est orienté de sorte que l'axe longitudinal X soit parallèle à cette direction de déplacement. L'opérateur enfonce ensuite la pédale d'accélérateur pour amener le mécanisme papillon en position d'admission maximale des gaz. La raideur du ressort 40 est choisie suffisamment élevée pour empêcher le pivotement du levier 30 lors de cette action et permettre la transmission intégrale de l'effort de commande. La longueur du câble de commande est choisie suffisamment courte pour que, lorsque le mécanisme papillon atteint sa position de butée correspondant à l'admission maximale des gaz, le levier de pédale n'a pas encore atteint sa position de butée basse. Alors, en exerçant un effort d'enfoncement de la pédale d'accélérateur supérieur au précédent, l'opérateur provoque l'écartement du levier 30 à l'encontre du ressort 40 jusqu'à ce que le levier de pédale d'accélérateur atteigne sa position de butée basse, comme indiqué par les flèches sur la figure 3. Lors du mouvement de pivotement du levier 30 dans le sens anti-horaire sur les figures, le coulisseau 24 est apte à se déplacer sur la branche 11 pour maintenir la direction longitudinale X du câble de commande C constante. Le mouvement de retour du levier 30 est empêché, lorsque l'effort exercé par l'opérateur disparaît, par les moyens formant cliquet du levier 30 venant en prise sur les dents 22 du secteur cranté 21. La course en déplacement du mécanisme papillon correspond avec celle du levier de pédale et le réglage est terminé.

Finalement, l'invention permet d'ajuster rapidement, et de façon automatique, la course en déplacement de deux organes mécaniques mobiles. Le réglage obtenu est précis, de sorte qu'il n'est pas nécessaire de prévoir un dispositif de compensation supplémentaire, apte à se déformer lorsqu'une tension excessive est exercée sur le câble de commande, comme cela est le cas dans des dispositifs de réglage connus. L'invention n'est pas limitée au secteur automobile et peut bien entendu trouver une application dans d'autres domaines de la mécanique, chaque fois qu'il est nécessaire d'ajuster lors de la pose d'un câble de commande ou lors d'opération d'entretien, la course en déplacement de deux organes mécaniques mobiles.

## Revendications

1. Dispositif de réglage destiné à être fixé sur un premier organe mécanique mobile et à relier par un câble (C) à un deuxième organe mécanique mobile en translation et comportant un coulisseau (24) monté avec une possibilité de déplacement en translation sur une glissière (10) apte à être fixée sur ledit premier organe mécanique mobile, un levier (30) articulé autour d'un axe de rotation (R) à une extrémité (32) sur ledit coulisseau (24) et apte à être relié au câble (C) à l'autre extrémité, par une liaison pivotante autour d'un axe parallèle audit axe de rotation (R), la glissière (10) étant orientée perpendiculairement à la direction (X) de déplacement du câble (C) en son point d'attache sur le levier, ce dernier étant apte à pivoter en écartement de ladite glissière lorsqu'une traction supérieure à une valeur donnée est exercée sur ledit câble afin de faire correspondre la course en déplacement des deux organes mécaniques mobiles et en ce que le dispositif comporte des moyens de blocage aptes à interdire le pivotement en sens inverse du levier.

2. Dispositif selon la revendication 1, caractérisé en ce que des moyens de rappel élastiques (40) agissent entre le coulisseau (24) et le levier (30) pour s'opposer au pivotement de ce dernier en écartement de ladite glissière.

3. Dispositif selon la revendication 2, caractérisé en ce que lesdits moyens de rappel élastiques sont constitués par un ressort hélicoïdal (40), coaxial audit axe de rotation (R), dont les extrémités sont retenues sur le levier et sur le coulisseau respectivement.

4. Dispositif selon la revendication 3, caractérisé en ce qu'une extrémité (42) du ressort (40) est retenue sur le coulisseau dans un logement (29) formé entre deux extensions latérales (25, 26) de montage de celui-ci sur la glissière.

5. Dispositif selon l'une des revendications 1 à 4, caractérisé en ce que ladite glissière est constituée par une tige recourbée en forme de U, le coulisseau (24) étant monté à translation sur une branche (11) du U, l'autre branche (13) du U étant fixée par son extrémité libre (15) sur le premier organe mobile.

6. Dispositif selon l'une des revendications 1 à 5, caractérisé en ce que lesdits moyens de blocage comportent un secteur cranté (21) solidaire du coulisseau et s'étendant selon un arc de cercle centré sur l'axe de rotation (R) du levier et des moyens formant cliquet, portés par le levier et aptes à venir en prise sur ledit secteur cranté pour interdire le mouvement de pivotement en sens inverse du levier.

7. Dispositif selon l'une des revendications 1 à 6, caractérisé en ce que le coulisseau comporte un corps allongé selon une direction parallèle à la direction de déplacement du coulisseau sur la glissière, le levier (30) étant monté à pivotement à une extrémité de ce corps allongé, et en ce que l'autre extrémité du corps allongé s'étend au-delà du secteur cranté à l'opposé de l'axe de rotation (R) pour servir de butée de pivotement au levier.

8. Dispositif selon l'une des revendications 1 à 7, caractérisé en ce que le coulisseau est monté sur la glissière avec une possibilité de rotation autour de sa direction de déplacement sur celle-ci.

## Patentansprüche

1. Einstellvorrichtung zur Befestigung an einem ersten mechanischen beweglichen Element und zur Verbindung über ein Kabel (C) mit einem zweiten mechanischen translationsbeweglichen Element mit einem Schieber (24), der mit der Möglichkeit der Translationsversetzung an einer Gleitschiene (10) angebracht ist, die an dem besagten ersten mechanischen beweglichen Element befestigt werden kann, einem Hebel (30), der um eine Drehachse (R) an einem Ende (32) an den besagten Schieber (24) angelenkt ist und mit dem Kabel (C) am anderen Ende verbunden werden kann und zwar über eine Drehverbindung um eine Achse parallel zu der besagten Drehachse (R), wobei der Schieber (10) senkrecht zur Versetzungsrichtung (X) des Kabels (C) an seiner Anbringungsstelle am Hebel ausgerichtet ist, letzterer in einen Abstand von der besagten Gleitschiene schwenken kann, wenn ein über einem gegebenen Wert liegender Zug auf das besagte Kabel ausgeübt wird, um die Bewegungsbahn der beiden beweglichen mechanischen Elemente aneinander anzupassen, und die Vorrichtung Sperreinrichtungen umfaßt, die ein Schwenken des Hebels in die umgekehrte Richtung verhindern.

2. Vorrichtung nach Anspruch 1, dadurch gekennzeichnet, daß elastische Rückstelleinrichtungen (40) zwischen dem Schieber (24) und dem Hebel (30) einem Schwenken des letzteren in einen Abstand von der besagten Gleitschiene entgegenwirken.

3. Vorrichtung nach Anspruch 2, dadurch gekennzeichnet, daß die elastischen Rückstelleinrichtungen aus einer Schraubenfeder (40) bestehen, die zur besagten Drehachse (R) koaxial angeordnet ist und deren Enden am Hebel und am Gleitschieber jeweils gehalten sind.

4. Vorrichtung nach Anspruch 3, dadurch gekennzeichnet, daß ein Ende (42) der Feder (40) am Schieber in einer Aufnahme (29) gehalten ist, die zwischen zwei seitlichen Veibreiterungen (25, 26) zum Anbringen des Schiebers an der Gleitschiene ausgebildet sind.

5. Vorrichtung nach einem der Ansprüche 1 bis 4, dadurch gekennzeichnet, daß die besagte Gleitschiene aus einer U-förmig gebogenen Stange besteht, der Schieber (24) translationsbeweglich an einem Arm (11) der U-Form angebracht ist und der andere Arm (13) der U-Form an seinem freien Ende (15) an dem ersten beweglichen Element befestigt ist.

6. Vorrichtung nach einem der Ansprüche 1 bis 5, dadurch gekennzeichnet, daß die Sperreinrichtungen ein Rastsegment (21), das fest mit dem Schieber verbunden ist und über einen Kreisbogen verläuft, der zur Drehachse (R) des Hebels zentriert ist, und Einrichtungen umfassen, die eine Ratsche bilden, vom Hebel getragen sind und am besagten Rastsegment in Eingriff kommen können, um eine Schwenkbewegung in umgekehrter Richtung des Hebels zu verhindern.

7. Vorrichtung nach einem der Ansprüche 1 bis 6, dadurch gekennzeichnet, daß der Schieber einen in einer Richtung parallel zur Bewegungsrichtung des Schiebers an der Gleitschiene langgestreckten Körper umfaßt, der Hebel (30) schwenkbar an einem Ende des langgestreckten Körpers angebracht ist und das andere Ende des langgestreckten Körpers über das Rastsegment auf der gegenüberliegenden Seite der Drehachse (R) hinaus verläuft, um als Schwenkanschlag des Hebels zu dienen.

8. Vorrichtung nach einem der Ansprüche 1 bis 7, dadurch gekennzeichnet, daß der Schieber an der Gleitschiene mit der Möglichkeit einer Drehung um seine Richtung der Versetzung daran angebracht ist.

## Claims

1. An adjustment device for fixing to a first movable mechanical member and for connecting by means of a cable (C) to a second mechanical member that is movable in translation, the device comprising a slide (24) mounted to be movable in translation on a slideway (10) suitable for being fixed to said first movable mechanical member, a lever (30) hinged about an axis of rotation (R) at one end (32) to said slide (24) and suitable for being connected to the cable (C) at its other end via a link that pivots about an axis parallel to said axis of rotation (R), the slideway (10) extending perpendicularly to the displacement direction (X) of the cable (C) at the point where it is attached to the lever, the lever being suitable for pivoting away from said slideway when traction greater than a given value is exerted on said cable in order to cause the displacement stroke of the two moving mechanical members to correspond, and the device further comprising locking means suitable for preventing the lever pivoting in the opposite direction.

2. A device according to claim 1, characterized in that resilient return means (40) act between the slide (24) and the lever (30) to oppose pivoting of the lever away from said slideway.

3. A device according to claim 2, characterized in that said resilient return means are constituted by a helical spring (40) disposed coaxially about said axis of rotation (R), with the ends thereof being held by the lever and by the slide, respectively.

4. A device according to claim 3, characterized in that one end (42) of the spring (40) is held to the slide in a housing (29) formed between two lateral extensions (25, 26) for assembling it to the slideway.

5. A device according to any one of claims 1 to 4, characterized in that said slideway is constituted by a U-shaped curved rod, the slide (24) being mounted to move in translation on one limb (11) of the U-shape, the other limb (13) of the U-shape being fixed via its free end (15) to the first moving member.

6. A device according to any one of claims 1 to 5, characterized in that said locking means comprise both a toothed sector (21) secured to the slide and extending over an arc of a circle centered on the axis of rotation (R) of the lever, and pawl-forming means carried by the lever and suitable for engaging said toothed sector to prevent pivoting movement of the lever in the opposite direction.

7. A device according to any one of claims 1 to 6, characterized in that the slide has a body that is elongate in a direction parallel to the displacement direction of the slide on the slideway, the lever (30) being mounted to pivot at one end on said elongate body, and in that the other end of the elongate body extends beyond the toothed sector away from the axis of rotation (R) to serve as a pivot abutment for the lever.

8. A device according to any one of claims 1 to 7, characterized in that the slide is mounted on the slideway with the ability to rotate about its direction of displacement thereon.
